# EUROPÄISCHE PATENTSCHRIFT

(11) **EP 4 532 969 B1**
(45) Veröffentlichungstag und Bekanntmachung des Hinweises auf die Patenterteilung: **04.02.2026**
(21) Anmeldenummer: 23732336.5
(22) Anmeldetag: 22.05.2023
(51) Int. Cl.: F16L 33/207, F16L 13/14

(54) **ROHRVERBINDER ZUM FÜHREN VON FLÜSSIGEN UND/ODER GASFÖRMIGEN MEDIEN, SOWIE ROHRVERBINDERZUSAMMENSTELLUNG UND VERFAHREN ZUM HERSTELLEN DES ROHRVERBINDERS, SOWIE VERFAHREN ZUM HERSTELLEN DER ROHRVERBINDERZUSAMMENSTELLUNG**
PIPE CONNECTOR FOR CHANNELLING LIQUID AND/OR GASEOUS MEDIA, PIPE CONNECTOR ASSEMBLY, METHOD FOR PRODUCING THE PIPE CONNECTOR, AND METHOD FOR PRODUCING THE PIPE CONNECTOR ASSEMBLY
RACCORD DE TUYAU POUR CANALISER DES MILIEUX LIQUIDES ET/OU GAZEUX, ENSEMBLE RACCORD DE TUYAU, PROCÉDÉ DE PRODUCTION DU RACCORD DE TUYAU ET PROCÉDÉ DE PRODUCTION DE L'ENSEMBLE RACCORD DE TUYAU

(30) Priorität: 25.05.2022 AT 503732022
(43) Veröffentlichungstag der Anmeldung: 09.04.2025
(73) Patentinhaber: Henn GmbH & Co KG., 6850 Dornbirn (AT)
(72) Erfinder: KESSLER, Hannes, 6850 Dornbirn (AT)
(74) Vertreter: Burger, Hannes Alfred
(86) Internationale Anmeldenummer: PCT/AT2023/060162
(87) Internationale Veröffentlichungsnummer: WO 2023/225695

(56) Entgegenhaltungen:
- EP-A1- 1 912 009
- DE-A1- 102009 007 019
- DE-A1- 102015 100 236

## Beschreibung

Die Erfindung betrifft einen Rohrverbinder zum Führen von flüssigen und/oder gasförmigen Medien, sowie eine Rohrverbinderzusammenstellung. Weiters betrifft die Erfindung ein Verfahren zum Herstellen des Rohrverbinders, sowie ein Verfahren zum Herstellen der Rohrverbinderzusammenstellung.

Ein Steckverbinder zur Bildung einer Steckerbaugruppe unter Verwendung eines zweiten Steckverbinders ist aus der EP 3 584 489 A1 bekannt geworden. Dazu sind ein rohrförmiger, aus einem Kunststoffmaterial gebildeter Steckverbinderkörper und eine aus einem metallischen Werkstoff gebildete Aufnahmehülse vorgesehen. Innerhalb der Aufnahmehülse ist zur Bildung einer Aufnahmenut für ein darin aufzunehmendes Dichtelement ein eigenes und zusätzliches Halteelement aus einem Kunststoffmaterial angeordnet. Eine erste Nutseitenfläche sowie die Nutgrundfläche der Aufnahmenut werden vom Steckverbinderkörper gebildet. Die zweite Nutseitenfläche der Aufnahmenut wird von einer Stirnfläche des zusätzlichen Halteelements gebildet. Der Steckverbinderkörper, die Aufnahmehülse und das innerhalb der Aufnahmehülse befindliche Halteelement definieren einen Aufnahmeraum für den zweiten Steckverbinder. Nachteilig dabei ist, dass ein eigenes zusätzliches Halteelement hergestellt werden muss und auch bei der Montage des Steckverbinders zumindest ein zusätzlicher Arbeitsschritt erforderlich ist.

EP 1 912 009 A1 offenbart ebenfalls eine Steckverbindungsanordnung.

Aufgabe der vorliegenden Erfindung war es. die Nachteile des Standes der Technik zu überwinden und einen Rohrverbinder sowie ein Verfahren zu dessen Herstellung zur Verfügung zu stellen, welcher in seiner Herstellung einfacher und kostengünstiger ist. Weiters soll eine Rohrverbinderzusammenstellung sowie dessen Herstellung angegeben werden.

Diese Aufgabe wird durch den Rohrverbinder zum Führen von flüssigen und/oder gasförmigen Medien, sowie eine Rohrverbinderzusammenstellung, sowie das Verfahren zum Herstellen des Rohrverbinders, sowie das Verfahren zum Herstellen der Rohrverbinderzusammenstellung gemäß den Ansprüchen gelöst.

Erfindungsgemäß ist ein Rohrverbinder zum Führen von flüssigen und/oder gasförmigen Medien ausgebildet. Der Rohrverbinder umfasst:
- einen Formkörper, einen Verbinderkörper zum Verbinden des Formkörpers mit einem zu verbindenden Rohr, eine Dichtung zum Abdichten der Verbindung zwischen dem Verbinderkörper und dem Formkörper, wobei der Verbinderkörper zumindest bereichsweise als Umformteil aus Metall ausgebildet ist,

wobei der Verbinderkörper einen Ringraum aufweist, der zwischen einem hülsenförmigen, im Querschnitt eine zentrale Längsachse des Verbinderkörpers im Wesentlichen ringförmig umgebenden ersten Mantelabschnitt und einem hülsenförmigen, im Querschnitt die zentrale Längsachse im Wesentlichen ringförmig umgebenden zweiten Mantelabschnitt des Verbinderkörpers liegt, wobei der erste Mantelabschnitt vom zweiten Mantelabschnitt umgeben ist und der erste Mantelabschnitt des Verbinderkörpers mit dem zweiten Mantelabschnitt an einem ersten Endabschnitt verbunden ist, insbesondere einstückig in Form eines Umschlages verbunden ist, und die Mantelabschnitte an einem zweiten Endabschnitt offen zueinander sind, wodurch eine Rohraufnahmeseite des Verbinderkörpers ausgebildet ist,
wobei das Rohr von der Rohraufnahmeseite her in den Ringraum des Verbinderkörpers einsetzbar ist,
wobei der Verbinderkörper von einer ersten Stirnseite des Formkörpers her auf den Formkörper aufgeschoben ist,
wobei am Formkörper eine Vertiefung ausgebildet ist, wobei der erste Endabschnitt des Verbinderkörpers formschlüssig in die Vertiefung eingepresst ist.

Der erfindungsgemäße Rohrverbinder bringt den Vorteil mit sich, dass durch diesen eine einfache und haltbare Verbindung zwischen einem Rohr und einem Formkörper herstellbar ist. Der Rohrverbinder kann dabei einen einfachen und robusten Aufbau aufweisen.

Alternativ zur Ausbildung eines Umschlages zwischen dem ersten Mantelabschnitt und dem zweiten Mantelabschnitt ist es auch denkbar, dass der erste Mantelabschnitt und der zweite Mantelabschnitt als gesonderte Bauteile gefertigt sind und mittels einer Verbindung miteinander gekoppelt sind. Eine derartige Verbindung kann beispielsweise eine Schweißverbindung, eine Pressverbindung, eine Falzverbindung, eine Vercrimpung oder eine sonstige Verbindung sein.

Bei einer gesonderten Fertigung des ersten Mantelabschnittes und des zweiten Mantelabschnittes ist es in einer ersten Ausführungsvariante denkbar, dass der erste Mantelabschnitt und der zweite Mantelabschnitt beide als Umformteil aus Metall ausgebildet sind. In einer alternativen Ausführungsvariante ist es auch denkbar, dass der erste Mantelabschnitt aus einem anderen Material gebildet ist, als der zweite Mantelabschnitt. Insbesondere kann vorgesehen sein, dass der erste Mantelabschnitt aus einem Kunststoffmaterial gebildet ist und der zweite Mantelabschnitt aus einem metallischen Werkstoff gebildet ist.

Weiters kann es zweckmäßig sein, wenn der Formkörper aus einem Kunststoffwerkstoff gebildet ist. Dies bringt den Vorteil mit sich, dass ein derart hergestellter Formkörper einen robusten Aufbau aufweisen kann. Darüber hinaus kann ein derart hergestellter Formkörper mittels eines Spritzgussverfahrens einfach hergestellt werden. Weiters kann ein derart hergestellter Formkörper einen geometrisch komplexen Aufbau aufweisen.

Ferner kann vorgesehen sein, dass der Formkörper als Steckverbinder ausgebildet ist, welcher zum Verbinden mit einem Gegensteckverbinder dient. Dies bringt den Vorteil mit sich, dass der Rohrverbinder zusammen mit einem Gegensteckverbinder als lösbare Verbindung ausgebildet sein kann.

Darüber hinaus kann vorgesehen sein, dass zwischen dem Formkörper und dem Verbinderkörper eine formschlüssige Rotationssicherung ausgebildet ist. Dies bringt den Vorteil mit sich, dass durch diese Maßnahme die Winkellage des Formkörpers zum Verbinderkörper eindeutig definiert werden kann und auch gegen unerwünschtes Verdrehen gesichert werden kann.

Vorteilhaft ist auch eine Ausprägung, gemäß welcher vorgesehen sein kann, dass die Rotationssicherung einen Vorsprung umfasst, der am Formkörper ausgebildet ist und dass im Verbinderkörper eine Ausnehmung ausgebildet ist, in welche der Vorsprung einragt. Durch diese Maßnahmen kann die Rotationssicherung einen einfachen Aufbau aufweisen.

Gemäß einer Weiterbildung ist es möglich, dass die Ausnehmung im ersten Endabschnitt des Verbinderkörpers ausgebildet ist, insbesondere dass die Ausnehmung den ersten Endabschnitt des Verbinderkörpers vollständig durchdringt. Weiters kann vorgesehen sein, dass die Ausnehmung einen am ersten Endabschnitt angeordneten dritten Mantelabschnitt und einen vierten Mantelabschnitt teilweise durchdringt. Durch diese Maßnahmen kann die Rotationssicherung einen einfachen Aufbau aufweisen. Insbesondere kann vorgesehen sein, dass die Ausnehmung in Form einer Ausstanzung ausgebildet ist.

Ferner kann es zweckmäßig sein, wenn der Vorsprung im Bereich der Vertiefung des Formkörpers angeordnet ist. Durch diese Maßnahmen kann die Rotationssicherung einen einfachen Aufbau aufweisen.

Darüber hinaus kann vorgesehen sein, dass anschließend an den ersten Mantelabschnitt des Verbinderkörpers ein erster Stirnwandabschnitt ausgebildet ist, welcher sich vom ersten Mantelabschnitt in Radialrichtung nach außen erstreckt, und dass an der ersten Stirnseite des Formkörpers eine Dichtungsnut ausgebildet ist, wobei die Dichtung in der Dichtungsnut aufgenommen ist und an der Dichtungsnut und dem ersten Stirnwandabschnitt anliegt. Durch diese Maßnahme kann eine verbesserte Abdichtung des Rohrverbinders erreicht werden.

Weiters kann vorgesehen sein, dass die Dichtungsnut außenliegend an der ersten Stirnseite des Formkörpers ausgebildet ist. Durch diese Maßnahme kann eine verbesserte Abdichtung des Rohrverbinders erreicht werden.

Gemäß einer besonderen Ausprägung ist es möglich, dass im zweiten Mantelabschnitt ein Sichtfenster angeordnet ist, welches den zweiten Mantelabschnitt durchdringt und die Sicht von außen in den Ringraum freigibt. Dies bringt den Vorteil mit sich, dass durch diese Maßnahme ein korrektes Fügen des Rohres mit dem Rohrverbinder kontrolliert werden kann.

Insbesondere kann vorgesehen sein, dass der Verbinderkörper als Tiefziehteil ausgebildet ist. Insbesondere kann vorgesehen sein, dass der Verbinderkörper einteilig ausgebildet ist.

Die Erfindung betrifft weiters eine Rohrverbinderzusammenstellung zum Führen von flüssigen und/oder gasförmigen Medien, die Rohrverbinderzusammenstellung umfassend:
- einen Rohrverbinder und ein mit dem Rohrverbinder gekoppeltes Rohr. Der Rohrverbinder ist nach einer der obigen Ausprägungen ausgebildet und das Rohr ist von der Rohraufnahmeseite her in den Ringraum des Verbinderkörpers eingesetzt, wobei in einer Pressstelle der erste Mantelabschnitt und/oder der zweite Mantelabschnitt in Radialrichtung verpresst ist, sodass das Rohr zwischen dem ersten Mantelabschnitt und dem zweiten Mantelabschnitt geklemmt ist.

Die erfindungsgemäße Rohrverbinderzusammenstellung bringt den Vorteil mit sich, dass durch diesen eine einfache und haltbare Verbindung zwischen einem Rohr und einem Formkörper herstellbar ist. Die Rohrverbinderzusammenstellung kann dabei einen einfachen und robusten Aufbau aufweisen.

Insbesondere kann es vorteilhaft sein, wenn das Rohr durch die Verpressung des ersten Mantelabschnittes und/oder des zweiten Mantelabschnittes verformt und an den gegenüberliegenden Mantelabschnitt angepresst ist. Durch diese Maßnahme kann eine verbesserte und dichte Verbindung zwischen dem Rohr und dem Rohrverbinder erreicht werden.

Ferner kann vorgesehen sein, dass zwischen dem Rohr und dem ersten Mantelabschnitt eine Dichtfläche ausgebildet ist. Durch diese Maßnahme kann die Dichtwirkung zwischen dem Rohrverbinder und dem Rohr erhöht werden.

Die Erfindung betrifft außerdem ein Verfahren zum Herstellen eines Rohrverbinders, das Verfahren umfassend die Verfahrensschritte:
- Bereitstellen eines Formkörpers;
- Bereitstellen eines Verbinderkörpers zum Verbinden des Formkörpers mit einem zu verbindenden Rohr;
- Bereitstellen einer Dichtung zum Abdichten der Verbindung zwischen dem Verbinderkörper und dem Formkörper.

Der Verbinderkörper ist zumindest bereichsweise als Umformteil aus Metall ausgebildet, wobei der Verbinderkörper einen Ringraum aufweist, der zwischen einem hülsenförmigen, im Querschnitt eine zentrale Längsachse des Verbinderkörpers im Wesentlichen ringförmig umgebenden ersten Mantelabschnitt und einem hülsenförmigen, im Querschnitt die zentrale Längsachse im Wesentlichen ringförmig umgebenden zweiten Mantelabschnitt des Verbinderkörpers liegt, wobei der erste Mantelabschnitt vom zweiten Mantelabschnitt umgeben ist und der erste Mantelabschnitt des Verbinderkörpers mit dem zweiten Mantelabschnitt an einem ersten Endabschnitt verbunden ist, insbesondere einstückig in Form eines Umschlages verbunden ist, und die Mantelabschnitte an einem zweiten Endabschnitt offen zueinander sind, wodurch eine Rohraufnahmeseite des Verbinderkörpers ausgebildet ist,
wobei das Rohr von der Rohraufnahmeseite her in den Ringraum des Verbinderkörpers einsetzbar ist,
wobei am Formkörper eine Vertiefung ausgebildet ist,

Das Verfahren umfasst außerdem die Verfahrensschritte:
- Aufschieben des Verbinderkörpers auf den Formkörper von einer ersten Stirnseite des Formkörpers her;
- Einpressen des ersten Endabschnittes des Verbinderkörpers in die Vertiefung zum Herstellen einer formschlüssigen Verbindung zwischen dem Verbinderkörper und dem Formkörper.

Die Erfindung betrifft außerdem ein Verfahren zum Herstellen einer Rohrverbinderzusammenstellung. Das Verfahren umfasst die Verfahrensschritte:
+ Bereitstellen eines Rohrverbinders, der Rohrverbinder umfassend:
   - einen Formkörper;
   - ein Verbinderkörper zum Verbinden des Formkörpers mit einem zu verbindenden Rohr;
   - eine Dichtung zum Abdichten der Verbindung zwischen dem Verbinderkörper und dem Formkörper,

   wobei der Verbinderkörper zumindest bereichsweise als Umformteil aus Metall ausgebildet ist,
   wobei der Verbinderkörper einen Ringraum aufweist, der zwischen einem hülsenförmigen, im Querschnitt eine zentrale Längsachse des Verbinderkörpers im Wesentlichen ringförmig umgebenden ersten Mantelabschnitt und einem hülsenförmigen, im Querschnitt die zentrale Längsachse im Wesentlichen ringförmig umgebenden zweiten Mantelabschnitt des Verbinderkörpers liegt, wobei der erste Mantelabschnitt vom zweiten Mantelabschnitt umgeben ist und der erste Mantelabschnitt des Verbinderkörpers mit dem zweiten Mantelabschnitt an einem ersten Endabschnitt verbunden ist, insbesondere einstückig in Form eines Umschlages verbunden ist, und die Mantelabschnitte an einem zweiten Endabschnitt offen zueinander sind, wodurch eine Rohraufnahmeseite des Verbinderkörpers ausgebildet ist,
   wobei das Rohr von der Rohraufnahmeseite her in den Ringraum des Verbinderkörpers einsetzbar ist,
   wobei der Verbinderkörper von einer ersten Stirnseite des Formkörpers her auf den Formkörper aufgeschoben ist,
   wobei am Formkörper eine Vertiefung ausgebildet ist, wobei der erste Endabschnitt des Verbinderkörpers formschlüssig in die Vertiefung eingepresst ist;
+ Bereitstellen des Rohres;
+ Einschieben des Rohres in den Ringraum;
+ Herstellen einer Pressstelle zur formschlüssigen Verbindung des Rohres mit dem Verbinderkörper.

In diesem Dokument wird der allgemeine Begriff "Rohr" verwendet. Es werden darunter alle Baukörper mit einer im wesentlichen kreisringförmigen Querschnittsform verstanden, wobei deren Längserstreckung von vollständig geradlinig bis hin zu bogenförmig gekrümmt verstanden wird.

Ein Rohr im Sinne dieses Dokumentes kann eine feste Formgebung aufweisen. Ein derartiges Rohr kann beispielsweise aus einem Thermoplastischen Kunststoff, wie etwa einem Polyethylen gebildet sein. Alternativ dazu ist es auch denkbar, dass das Rohr aus einem Elastomeren Kunststoff, wie etwa einem Ethylen-Propylen-Dien-(Monomer)-Kautschuk gebildet ist. Ein derartiges Rohr aus einem Elastomeren Kunststoff kann auch als Schlauch bezeichnet werden.

Ein Rohrverbinder im Sinne dieses Dokumentes kann auch als Fitting bezeichnet werden.

Der Rohrverbinder kann in einem Fahrzeug, insbesondere in einem straßengebundenen Kraftfahrzeug mit Verbrennungsmotor, eingesetzt werden. Der Rohrverbinder dient zum Verbinden von Leitungen, Rohren oder Schläuchen zum Transport von flüssigen oder gasförmigen Medien.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Rohrverbinderzusammenstellung in einer Schnittansicht;
- Fig. 2: eine perspektivische Ansicht des ersten Ausführungsbeispiels der Rohrverbinderzusammenstellung;
- Fig. 3: ein erster Verfahrensschritt zum Herstellen der Rohrverbinderzusammenstellung;
- Fig. 4: ein zweiter Verfahrensschritt zum Herstellen der Rohrverbinderzusammenstellung;
- Fig. 5: ein dritter Verfahrensschritt zum Herstellen der Rohrverbinderzusammenstellung;
- Fig. 6: ein vierter Verfahrensschritt zum Herstellen der Rohrverbinderzusammenstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

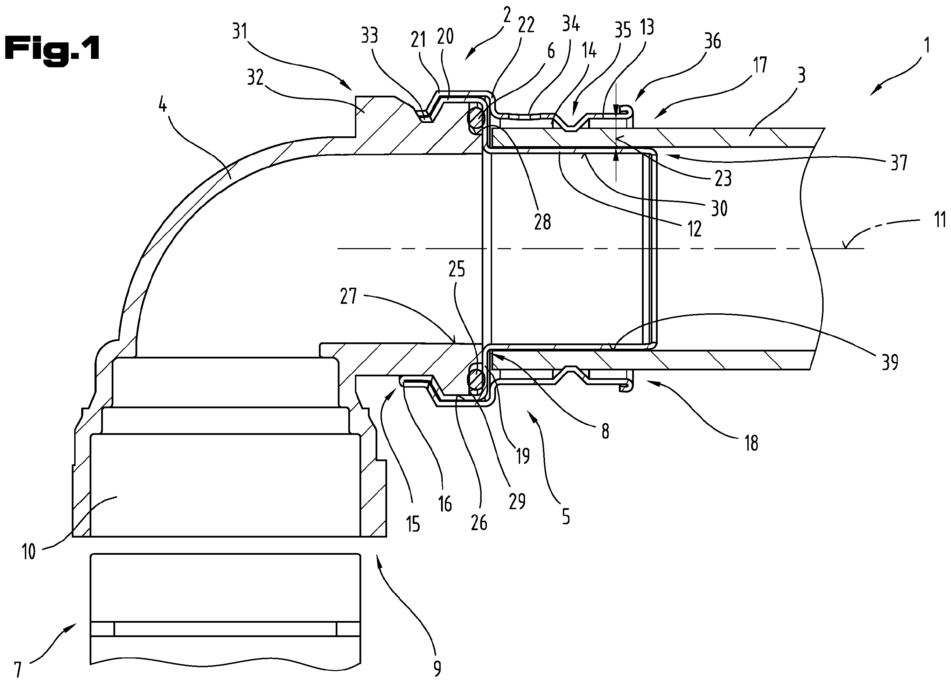

Fig. 1 zeigt ein erstes Ausführungsbeispiel einer Rohrverbinderzusammenstellung 1. Wie aus Fig. 1 ersichtlich, kann vorgesehen sein, dass die Rohrverbinderzusammenstellung 1 einen Rohrverbinder 2 umfasst, welcher zum Koppeln mit einem Rohr 3 dienen kann.

Wie aus Fig. 1 ersichtlich, kann vorgesehen sein, dass der Rohrverbinder 2 einen Formkörper 4 umfasst, welcher mit einem Verbinderkörper 5 gekoppelt sein kann. Der Verbinderkörper 5 kann zum Anbinden bzw. zum Koppeln des Rohrers 3 mit dem Formkörper 4 dienen.

Weiters kann vorgesehen sein, dass zwischen dem Formkörper 4 und dem Verbinderkörper 5 eine Dichtung 6 angeordnet ist. Die Dichtung 6 kann zum Abdichten zwischen dem Formkörper 4 und dem Verbinderkörper 5 dienen.

Im Ausführungsbeispiel nach Fig. 1 ist die Rohrverbinderzusammenstellung 1 in einer gefügten und dicht verpressten Stellung dargestellt. Wie aus Fig. 1 ersichtlich, kann vorgesehen sein, dass der Formkörper 4 als Steckverbinder ausgebildet ist, welcher zum Verbinden mit einem Gegensteckverbinder 7 dienen kann. Insbesondere kann vorgesehen sein, dass der Formkörper 4 an einer ersten Stirnseite 8 mit dem Verbinderkörper 5 gekoppelt ist. Insbesondere kann vorgesehen sein, dass die erste Stirnseite 8 des Formkörpers 4 dem Rohr 3 zugewandt ist.

Weiters kann vorgesehen sein, dass an einer zweiten Stirnseite 9 des Formkörpers 4 ein Aufnahmeraum 10 ausgebildet ist, welcher zum Einstecken des Gegensteckverbinders 7 dient. Insbesondere kann durch diese Maßnahme eine bedarfsweise lösbare Verbindung zwischen dem Formkörper 4 und dem Gegensteckverbinder 7 hergestellt werden.

Wie aus Fig. 1 weiters ersichtlich, kann vorgesehen sein, dass der Verbinderkörper 5 in Form eines Blechumformteiles, insbesondere in Form eines Tiefziehteils, ausgebildet ist. Der Verbinderkörper 5 kann hierbei aus einem ebenen Blech durch entsprechende Tiefzieh- bzw. Umformschritte hergestellt sein.

Wie aus Fig. 1 weiters ersichtlich, kann vorgesehen sein, dass der Verbinderkörper 5 als rotationssymmetrisches Bauteil ausgebildet ist, welches bezüglich einer zentralen Längsachse 11 eine rotationssymmetrische Formgebung aufweist. Insbesondere kann vorgesehen sein, dass der Verbinderkörper 5 einen ersten Mantelabschnitt 12 aufweist, welcher hülsenförmig bzw. hohlzylindrisch ausgebildet ist. Weiters kann vorgesehen sein, dass der Formkörper 4 einen zweiten Mantelabschnitt 13 aufweist, welcher hohlzylindrisch bzw. hülsenförmig ausgebildet ist. Der erste Mantelabschnitt 12 und der zweite Mantelabschnitt 13 können koaxial um die zentrale Längsachse 11 angeordnet sein. Insbesondere kann vorgesehen sein, dass zwischen dem ersten Mantelabschnitt 12 und dem zweiten Mantelabschnitt 13 ein Ringraum 14 ausgebildet ist.

Der erste Mantelabschnitt 12 und der zweite Mantelabschnitt 13 können an einem ersten Endabschnitt 15 des Verbinderkörpers 5 durch einen Umschlag 16 miteinander gekoppelt sein. Ein derartiger Umschlag 16 kann beispielsweise dadurch erreicht werden, dass der Formkörper 4 aus einem ebenen Blech zu einer Hohlzylinder tiefgezogen wird. Anschließend kann ein offenes Längsende des Hohlzylinders in Richtung des geschlossenen Längsendes des Hohlzylinders außen umgeschlagen bzw. um 180° gebogen bzw. rückgestülpt werden. Dadurch kann erreicht werden, dass der erste Mantelabschnitt 12 und der außenliegende, zweite Mantelabschnitt 13 an einem zweiten Endabschnitt 17 enden, wodurch der Ringraum 14 am zweiten Endabschnitt 17 offen und von außen zugänglich sein kann. Somit kann am zweiten Endabschnitt 17 des Verbinderkörpers 5 eine Rohraufnahmeseite 18 zur Aufnahme des Rohres 3 ausgebildet sein.

Weiters kann vorgesehen sein, dass anschließend an den ersten Mantelabschnitt 12 ein erster Stirnwandabschnitt 19 ausgebildet ist. Der erste Stirnwandabschnitt 19 kann sich ausgehend vom ersten Mantelabschnitt 12 in radialer Richtung nach außen erstrecken.

Weiters kann vorgesehen sein, dass anschließend an den ersten Stirnwandabschnitt 19 ein dritter Mantelabschnitt 20 ausgebildet ist. Der dritte Mantelabschnitt 20 kann sich im unverpressten Zustand des Verbinderkörpers 5 hohlzylindrisch bzw. hülsenförmig bis zum Umschlag 16 erstrecken.

Weiters kann vorgesehen sein, dass ausgehend vom Umschlag 16 zum zweiten Mantelabschnitt 13 ein vierter Mantelabschnitt 21 ausgebildet ist. Der vierte Mantelabschnitt 21 kann den dritten Mantelabschnitt 20 zylinderförmig bzw. hülsenförmig umgeben.

Insbesondere kann vorgesehen sein, dass der dritte Mantelabschnitt 20 und der vierte Mantelabschnitt 21 aneinander anliegen. Alternativ können der dritte Mantelabschnitt 20 und der vierte Mantelabschnitt 21 in einem Abstand zueinander angeordnet sein, wobei der Abstand geringer sein kann, als die Blechdicke des Verbinderkörpers 5. Weiters kann vorgesehen sein, dass zwischen dem vierten Mantelabschnitt 21 und dem zweiten Mantelabschnitt 13 ein zweiter Stirnwandabschnitt 22 ausgebildet ist. Der zweite Stirnwandabschnitt 22 kann sich ausgehend vom zweiten Mantelabschnitt 13 in radialer Richtung nach außen erstrecken und bis zum vierten Mantelabschnitt 21 erstrecken.

Wie aus Fig. 1 ersichtlich, kann vorgesehen sein, dass der zweite Stirnwandabschnitt 22 eine geringere radiale Erstreckung als der erste Stirnwandabschnitt 19 aufweist. Dadurch können der erste Mantelabschnitt 12 und der zweite Mantelabschnitt 13 in einem Abstand 23 zueinander angeordnet sein, sodass sich der Ringraum 14 ergibt.

Wie aus Fig. 1 weiters ersichtlich, kann vorgesehen sein, dass an der ersten Stirnseite 8 des Formkörpers 4 eine Dichtungsnut 25 ausgebildet ist. Die Dichtungsnut 25 kann zur Aufnahme der Dichtung 6 dienen. Insbesondere kann vorgesehen sein, dass sich die Dichtungsnut 25 ausgehend einer Außenmantelfläche 26 des Formkörpers 4 in Richtung einer Innenmantelfläche 27 des Formkörpers 4 erstreckt.

Hierbei kann die Dichtungsnut 25 einen radialen Nutgrund 28 aufweisen. Der radiale Nutgrund 28 kann nach außen gerichtet sein. Weiters kann vorgesehen sein, dass sich die Dichtungsnut 25 ausgehend von der ersten Stirnseite 8 des Formkörpers 4 in axialer Richtung erstreckt und einen axialen Nutgrund 29 aufweist. Insbesondere kann vorgesehen sein, dass die Dichtung 6 zwischen dem axialen Nutgrund 29 der Dichtungsnut 25 und dem ersten Stirnwandabschnitt 19 gepresst ist.

Weiters kann vorgesehen sein, dass der Formkörper 4 eine Vertiefung 24 aufweist, welche zum formschlüssigen Verbinden des Verbinderkörpers 5 mit dem Formkörper 4 dient. Die Vertiefung 24 kann, wie im Ausführungsbeispiel nach Fig. 1 dargestellt, dadurch erreicht werden, dass die Außenmantelfläche 26 des Formkörpers 4 ausgehend von der ersten Stirnseite 8 des Formkörpers 4 in Richtung zur zweiten Stirnseite 9 des Formkörpers 4 eine Durchmesserverringerung aufweist.

In einer alternativen, nicht dargestellten Ausführungsvariante kann die Vertiefung 24 auch durch eine im Formkörper 4 ausgebildete Ausnehmung gebildet sein.

Wie aus Fig. 1 weiters ersichtlich, kann vorgesehen sein, dass die Innenmantelfläche 27 des Formkörpers 4 und eine Innenmantelfläche 30 des ersten Mantelabschnittes 12 aneinander anschließen. Insbesondere kann vorgesehen sein, dass die Innenmantelfläche 27 des Formkörpers 4 und die Innenmantelfläche 30 des ersten Mantelabschnittes 12 einen gleichen Durchmesser aufweisen. Insbesondere kann vorgesehen sein, dass die Innenmantelfläche 27 des Formkörpers 4 und die Innenmantelfläche 30 des ersten Mantelabschnittes 12 direkt vom durchströmten Fluid kontaktiert werden.

Wie aus Fig. 1 weiters ersichtlich, kann vorgesehen sein, dass eine Rotationssicherung 31 ausgebildet ist. Die Rotationssicherung 31 kann als Verdrehsicherung zwischen dem Formkörper 4 und dem Verbinderkörper 5 dienen. Insbesondere kann vorgesehen sein, dass die Rotationssicherung 31 dadurch gebildet ist, dass am Formkörper 4 ein Vorsprung 32 ausgebildet ist, welcher mit einer Ausnehmung 33 im Verbinderkörper 5 korrespondiert. Alternativ dazu ist es in einer nicht dargestellten Ausführungsvariante natürlich auch denkbar, dass im Formkörper 4 eine Ausnehmung ausgebildet ist, in welche eine Lasche oder eine Sicke des Verbinderkörpers 5 eingepresst wird.

Wie aus Fig. 1 weiters ersichtlich, kann vorgesehen sein, dass im zweiten Mantelabschnitt 13 ein Sichtfenster 34 ausgebildet ist, durch welches hindurch das Rohr 3 und somit der Einsteckzustand des Rohres 3 von außen sichtbar sind.

Wie aus Fig. 1 weiters ersichtlich, kann vorgesehen sein, dass der erste Stirnwandabschnitt 19 als Axialanschlag für das Rohr 3 dient.

Wie aus Fig. 1 weiters ersichtlich, kann vorgesehen sein, dass im zweiten Mantelabschnitt 13 eine Pressstelle 35 ausgebildet ist, an welcher der zweite Mantelabschnitt 13 an das Rohr 3 angepresst ist. Die Pressstelle 35 kann beispielsweise in Form einer umlaufenden Sicke realisiert sein.

Wie aus Fig. 1 weiters ersichtlich, kann vorgesehen sein, dass der zweite Mantelabschnitt 13 am zweiten Endabschnitt 17 des Verbinderkörpers 5 einen Falz 36 aufweist. Der Falz 36 kann in Form eines 180° Rückschlages des Bleches ausgebildet sein.

Wie aus Fig. 1 weiters ersichtlich, kann vorgesehen sein, dass der erste Mantelabschnitt 12 im Bereich des zweiten Endabschnittes 17 eine Verjüngung 37 aufweist. Die Verjüngung 37 kann zur Erleichterung des Aufschiebens des Rohres 3 in den Verbinderkörper 5 dienen.

Weiters kann vorgesehen sein, dass der Formkörper 4 zwischen der ersten Stirnseite 8 und der zweiten Stirnseite 9 einen Bogen aufweist. Insbesondere kann, wie in Fig. 1 ersichtlich, vorgesehen sein, dass der Bogen als 90° Bogen ausgeführt ist. Durch diese Maßnahme kann in einigen Anwendungen eine platzsparende und vor allem leicht zu verbindende Leitungsanordnung gebildet werden.

Wie aus Fig. 1 weiters ersichtlich, kann vorgesehen sein, dass zwischen dem Rohr 3 und dem ersten Mantelabschnitt 12 eine Dichtfläche 39 ausgebildet ist. Die Dichtfläche 39 kann dadurch gebildet sein, dass das Rohr 3 an den ersten Mantelabschnitt 12 angepresst ist. Alternativ dazu kann die Dichtfläche 39 auch an einer Dichtung gebildet sein, welche zwischen dem Rohr 3 und dem ersten Mantelabschnitt 12 angeordnet sein kann.

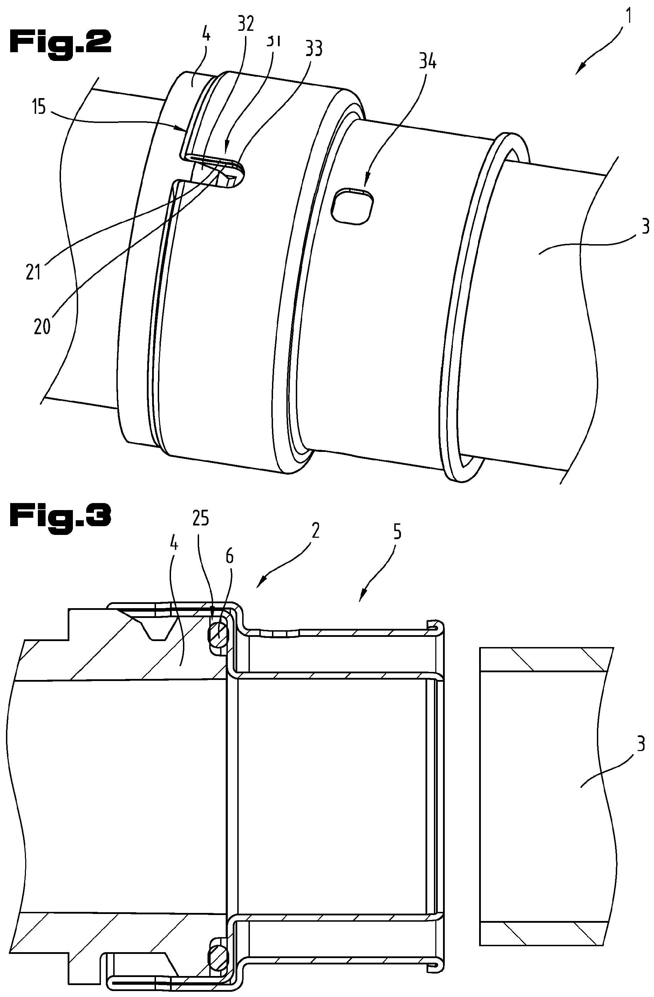

Fig. 2 zeigt das erste Ausführungsbeispiel der Rohrverbinderzusammenstellung 1 in einer perspektivischen Ansicht, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Darstellung nach Fig. 2 ist die Rohrverbinderzusammenstellung 1 im nicht verpressten Zustand dargestellt, wobei alle Bauteile miteinander gefügt sind. Der Formkörper 4 ist der Übersichtlichkeit halber nur teilweise dargestellt.

In Fig. 2 ist die Rotationssicherung 31, insbesondere der Vorsprung 32 des Formkörpers 4 und die Ausnehmung 33 des Verbinderkörpers 5 gut sichtbar. Wie aus Fig. 2 ersichtlich, kann vorgesehen sein, dass die Ausnehmung 33 in Form einer Ausstanzung ausgebildet ist, welche den dritten Mantelabschnitt 20 und den vierten Mantelabschnitt 21 am ersten Endabschnitt 15 des Verbinderkörpers 5 durchdringt.

Auch das Sichtfenster 34 ist in Fig. 2 gut sichtbar.

In den Fig. 3 bis 5 sind die einzelnen Verfahrensschritte zum Herstellen der Rohrverbinderzusammenstellung 1 dargestellt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

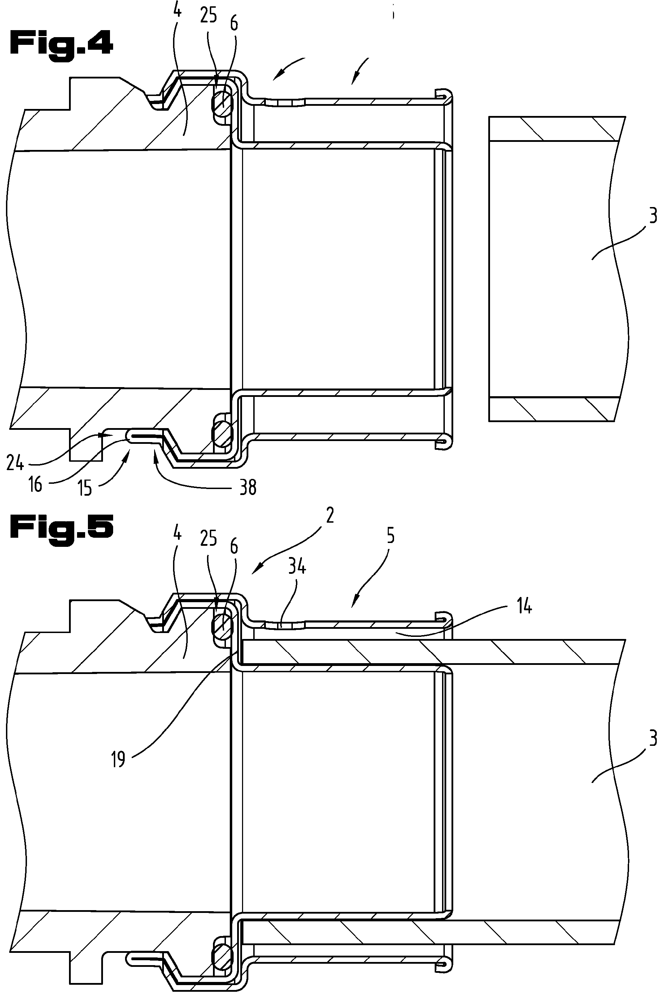

In den Fig. 3 und 4 ist die Herstellung des Rohrverbinders 2 dargestellt.

Wie aus Fig. 3 ersichtlich, werden in einem ersten Verfahrensschritt der Formkörper 4 und der Verbinderkörper 5 sowie die Dichtung 6 bereitgestellt. Die Dichtung 6 wird in der Dichtungsnut 25 platziert und der Verbinderkörper 5 auf den Formkörper 4 aufgeschoben. Die Dichtung 6 ist hierbei zwischen dem Formkörper 4 und dem Verbinderkörper 5 platziert.

In einem anschließenden Verfahrensschritt gemäß der Darstellung nach Fig. 4 wird zwischen dem Formkörper 4 und dem Verbinderkörper 5 ein Formschluss 38 hergestellt, wobei entsprechend der Darstellung nach Fig. 4 vorgesehen sein kann, dass der erste Endabschnitt 15 des Verbinderkörpers 5 nach innen verpresst wird, sodass der Umschlag 16 in die Vertiefung 24 eingepresst wird. In der Darstellung nach Fig. 4 ist der Rohrverbinder 2 in seiner fertig verpressten und somit einsatzbereiten Stellung dargestellt. Der Fertigungszustand nach Fig. 4 kann gleichzeitig ein Auslieferungszustand an einen Systemhersteller sein, der den Rohrverbinder 1 in ein Leitungssystem integriert.

In einem weiteren Verfahrensschritt gemäß Fig. 5 kann das Rohr 3 in den Ringraum 14 des Verbinderkörpers 5 eingeschoben werden. Hierbei kann das Rohr 3 soweit in den Verbinderkörper 5 eingeschoben werden, bis es am ersten Stirnwandabschnitt 19 zur Anlage kommt. Durch das Sichtfenster 34 hindurch kann die korrekte Lage des Rohres 3 kontrolliert werden.

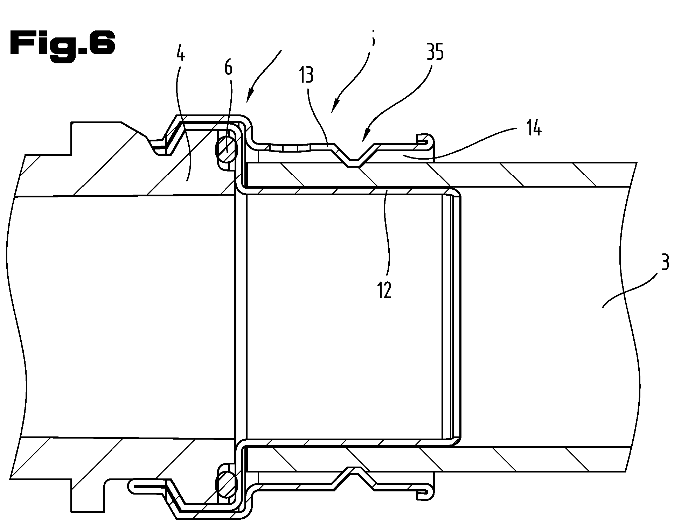

In einem weiteren Verfahrensschritt gemäß Fig. 6 kann der zweite Mantelabschnitt 13 des Verbinderkörpers 5 nach innen verpresst werden, sodass die Pressstelle 35 entsteht. Hierbei kann der zweite Mantelabschnitt 13 an das Rohr 3 angepresst werden. Dadurch kann auch das Rohr 3 an den ersten Mantelabschnitt 12 angepresst werden.

Die Verfahrensschritte nach den Figuren 5 und 6 können vom Systemhersteller durchgeführt werden, der den Rohrverbinder 1 in ein Leitungssystem integriert.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Rohrverbinderzusammenstellung | 30 | Innenmantelfläche erster Mantelabschnitt |
| 2 | Rohrverbinder | | |
| 3 | Rohr | 31 | Rotationssicherung |
| 4 | Formkörper | 32 | Vorsprung |
| 5 | Verbinderkörper | 33 | Ausnehmung |
| 6 | Dichtung | 34 | Sichtfenster |
| 7 | Gegensteckverbinder | 35 | Pressstelle |
| 8 | erste Stirnseite Formkörper | 36 | Falz |
| 9 | zweite Stirnseite Formkörper | 37 | Verjüngung |
| 10 | Aufnahmeraum | 38 | Formschluss |
| 11 | zentrale Längsachse | 39 | Dichtfläche |
| 12 | erster Mantelabschnitt | | |
| 13 | zweiter Mantelabschnitt | | |
| 14 | Ringraum | | |
| 15 | erster Endabschnitt Verbinderkörper | | |
| 16 | Umschlag | | |
| 17 | zweiter Endabschnitt Verbinderkörper | | |
| 18 | Rohraufnahmeseite | | |
| 19 | erster Stirnwandabschnitt | | |
| 20 | dritter Mantelabschnitt | | |
| 21 | vierter Mantelabschnitt | | |
| 22 | zweiter Stirnwandabschnitt | | |
| 23 | Abstand | | |
| 24 | Vertiefung | | |
| 25 | Dichtungsnut | | |
| 26 | Außenmantelfläche Formkörper | | |
| 27 | Innenmantelfläche Formkörper | | |
| 28 | radialer Nutgrund | | |
| 29 | axialer Nutgrund | | |

## Patentansprüche

1. Rohrverbinder (2) zum Führen von flüssigen und/oder gasförmigen Medien, der Rohrverbinder (2) umfassend:
- einen Formkörper (4);
- ein Verbinderkörper (5) zum Verbinden des Formkörpers (4) mit einem zu verbindenden Rohr (3);
- eine Dichtung (6) zum Abdichten der Verbindung zwischen dem Verbinderkörper (5) und dem Formkörper (4),
wobei
der Verbinderkörper (5) zumindest bereichsweise als Umformteil aus Metall ausgebildet ist, wobei der Verbinderkörper (5) einen Ringraum (14) aufweist, der zwischen einem hülsenförmigen, im Querschnitt eine zentrale Längsachse (11) des Verbinderkörpers (5) im Wesentlichen ringförmig umgebenden ersten Mantelabschnitt (12) und einem hülsenförmigen, im Querschnitt die zentrale Längsachse (11) im Wesentlichen ringförmig umgebenden zweiten Mantelabschnitt (13) des Verbinderkörpers (5) liegt, wobei der erste Mantelabschnitt (12) vom zweiten Mantelabschnitt (13) umgeben ist und der erste Mantelabschnitt (12) des Verbinderkörpers (5) mit dem zweiten Mantelabschnitt (13) an einem ersten Endabschnitt (15) verbunden ist, insbesondere einstückig in Form eines Umschlages (16) verbunden ist, und die Mantelabschnitte (12, 13) an einem zweiten Endabschnitt (17) offen zueinander sind, wodurch eine Rohraufnahmeseite (18) des Verbinderkörpers (5) ausgebildet ist,
wobei das Rohr (3) von der Rohraufnahmeseite (18) her in den Ringraum (14) des Verbinderkörpers (5) einsetzbar ist,
wobei der Verbinderkörper (5) von einer ersten Stirnseite (8) des Formkörpers (4) her auf den Formkörper (4) aufgeschoben ist,
wobei am Formkörper (4) eine Vertiefung (24) ausgebildet ist, **dadurch gekennzeichnet, dass** der erste Endabschnitt (15) des Verbinderkörpers (5) formschlüssig in die Vertiefung (24) eingepresst ist.

2. Rohrverbinder (2) nach Anspruch 1, **dadurch gekennzeichnet, dass** der Formkörper (4) aus einem Kunststoffwerkstoff gebildet ist.

3. Rohrverbinder (2) nach Anspruch 1 oder 2, **dadurch gekennzeichnet, dass** der Formkörper (4) als Steckverbinder ausgebildet ist, welcher zum Verbinden mit einem Gegensteckverbinder (7) dient.

4. Rohrverbinder (2) nach einem der vorhergehenden Ansprüche, **dadurch gekennzeichnet, dass** zwischen dem Formkörper (4) und dem Verbinderkörper (5) eine formschlüssige Rotationssicherung (31) ausgebildet ist.

5. Rohrverbinder (2) nach Anspruch 4, **dadurch gekennzeichnet, dass** die Rotationssicherung (31) einen Vorsprung (32) umfasst, der am Formkörper (4) ausgebildet ist und dass im Verbinderkörper (5) eine Ausnehmung (33) ausgebildet ist, in welche der Vorsprung (32) einragt.

6. Rohrverbinder (2) nach Anspruch 4, **dadurch gekennzeichnet, dass** die Ausnehmung (33) im ersten Endabschnitt (15) des Verbinderkörpers (5) ausgebildet ist, insbesondere dass die Ausnehmung (33) den ersten Endabschnitt (15) des Verbinderkörpers (5) vollständig durchdringt.

7. Rohrverbinder (2) nach Anspruch 5 oder 6, **dadurch gekennzeichnet, dass** der Vorsprung (32) im Bereich der Vertiefung (24) des Formkörpers (4) angeordnet ist.

8. Rohrverbinder (2) nach einem der vorhergehenden Ansprüche, **dadurch gekennzeichnet, dass** anschließend an den ersten Mantelabschnitt (12) des Verbinderkörpers (5) ein erster Stirnwandabschnitt (19) ausgebildet ist, welcher sich vom ersten Mantelabschnitt (12) in Radialrichtung nach außen erstreckt, und dass an der ersten Stirnseite (8) des Formkörpers (4) eine Dichtungsnut (25) ausgebildet ist, wobei die Dichtung (6) in der Dichtungsnut (25) aufgenommen ist und an der Dichtungsnut (25) und dem ersten Stirnwandabschnitt (19) anliegt.

9. Rohrverbinder (2) nach Anspruch 8, **dadurch gekennzeichnet, dass** die Dichtungsnut (25) außenliegend an der ersten Stirnseite (8) des Formkörpers (4) ausgebildet ist.

10. Rohrverbinder (2) nach einem der vorhergehenden Ansprüche, **dadurch gekennzeichnet, dass** im zweiten Mantelabschnitt (13) ein Sichtfenster (34) angeordnet ist, welches den zweiten Mantelabschnitt (13) durchdringt und die Sicht von außen in den Ringraum (14) freigibt.

11. Rohrverbinderzusammenstellung (1) zum Führen von flüssigen und/oder gasförmigen Medien, die Rohrverbinderzusammenstellung (1) umfassend:
- einen Rohrverbinder (2);
- ein mit dem Rohrverbinder (2) gekoppeltes Rohr (3) ,
**dadurch gekennzeichnet, dass**
der Rohrverbinder (2) nach einem der vorhergehenden Ansprüche ausgebildet ist und dass das Rohr (3) von der Rohraufnahmeseite (18) her in den Ringraum (14) des Verbinderkörpers (5) eingesetzt ist, wobei in einer Pressstelle (35) der erste Mantelabschnitt (12) und/oder der zweite Mantelabschnitt (13) in Radialrichtung verpresst ist, sodass das Rohr (3) zwischen dem ersten Mantelabschnitt (12) und dem zweiten Mantelabschnitt (13) geklemmt ist.

12. Rohrverbinderzusammenstellung (1) nach Anspruch 11, **dadurch gekennzeichnet, dass** das Rohr (3) durch die Verpressung des ersten Mantelabschnittes (12) und/oder des zweiten Mantelabschnittes (13) verformt und an den gegenüberliegenden Mantelabschnitt (12) angepresst ist.

13. Rohrverbinderzusammenstellung (1) nach Anspruch 11 oder 12, **dadurch gekennzeichnet, dass** zwischen dem Rohr (3) und dem ersten Mantelabschnitt (12) eine Dichtfläche (39) ausgebildet ist.

14. Verfahren zum Herstellen eines Rohrverbinders (2), das Verfahren umfassend die Verfahrensschritte:
- Bereitstellen eines Formkörpers (4);
- Bereitstellen eines Verbinderkörpers (5) zum Verbinden des Formkörpers (4) mit einem zu verbindenden Rohr (3);
- Bereitstellen einer Dichtung (6) zum Abdichten der Verbindung zwischen dem Verbinderkörper (5) und dem Formkörper (4),
wobei
der Verbinderkörper (5) zumindest bereichsweise als Umformteil aus Metall ausgebildet ist, wobei der Verbinderkörper (5) einen Ringraum (14) aufweist, der zwischen einem hülsenförmigen, im Querschnitt eine zentrale Längsachse (11) des Verbinderkörpers (5) im Wesentlichen ringförmig umgebenden ersten Mantelabschnitt (12) und einem hülsenförmigen, im Querschnitt die zentrale Längsachse (11) im Wesentlichen ringförmig umgebenden zweiten Mantelabschnitt (13) des Verbinderkörpers (5) liegt, wobei der erste Mantelabschnitt (12) vom zweiten Mantelabschnitt (13) umgeben ist und der erste Mantelabschnitt (12) des Verbinderkörpers (5) mit dem zweiten Mantelabschnitt (13) an einem ersten Endabschnitt (15) verbunden ist, insbesondere einstückig in Form eines Umschlages (16) verbunden ist, verbunden ist und die Mantelabschnitte (12, 13) an einem zweiten Endabschnitt (17) offen zueinander sind, wodurch eine Rohraufnahmeseite (18) des Verbinderkörpers (5) ausgebildet ist, wobei das Rohr (3) von der Rohraufnahmeseite (18) her in den Ringraum (14) des Verbinderkörpers (5) einsetzbar ist,
wobei am Formkörper (4) eine Vertiefung (24) ausgebildet ist,
**gekennzeichnet durch** die Verfahrensschritte:
- Aufschieben des Verbinderkörpers (5) auf den Formkörper (4) von einer ersten Stirnseite (8) des Formkörpers (4) her;
- Einpressen des ersten Endabschnittes (15) des Verbinderkörpers (5) in die Vertiefung (24) zum Herstellen einer formschlüssigen Verbindung zwischen dem Verbinderkörper (5) und dem Formkörper (4).

15. Verfahren zum Herstellen einer Rohrverbinderzusammenstellung (1), **gekennzeichnet durch** die Verfahrensschritte:
+ Bereitstellen eines Rohrverbinders (2) hergestellt nach Anspruch 14
+ Bereitstellen des Rohres (3);
+ Einschieben des Rohres (3) in den Ringraum (14);
+ Herstellen einer Pressstelle (35) zur formschlüssigen Verbindung des Rohres (3) mit dem Verbinderkörper (5).

## Claims

1. A pipe connector (2) for conveying liquid and/or gaseous media, the pipe connector (2) comprising:
- a molded body (4);
- a connector body (5) for connecting the molded body (4) to a pipe (3) to be connected;
- a seal (6) for sealing the connection between the connector body (5) and the molded body (4),
wherein
the connector body (5) is at least partially formed as a forming part of metal,
wherein the connector body (5) has an annular space (14) which is located between a sleeve-shaped first jacket section (12), which in cross-section essentially annularly surrounds a central longitudinal axis (11) of the connector body (5), and a sleeve-shaped second jacket section (13) of the connector body (5), which in cross-section essentially annularly surrounds the central longitudinal axis (11), wherein the first jacket section (12) is surrounded by the second jacket section (13) and the first jacket section (12) of the connector body (5) is connected to the second jacket section (13) at a first end section (15), in particular connected integrally in the form of a sleeve (16), and the jacket sections (12 ,13) are open to each other at a second end section (17), thereby forming a pipe receiving side (18) of the connector body (5),
wherein the pipe (3) can be inserted into the annular space (14) of the connector body (5) from the pipe receiving side (18),
wherein the connector body (5) is pushed onto the molded body (4) from a first end face (8) of the molded body (4),
wherein a recess (24) is formed on the molded body (4), **characterized in that** the first end section (15) of the connector body (5) is pressed into the recess (24) in a form-fitting manner.

2. The pipe connector (2) according to claim 1, **characterized in that** the molded body (4) is formed from a plastic material.

3. The pipe connector (2) according to claim 1 or 2, **characterized in that** the molded body (4) is configured as a plug connector which serves to connect to a mating connector (7).

4. The pipe connector (2) according to one of the preceding claims, **characterized in that** a form-fitting rotation lock (31) is formed between the molded body (4) and the connector body (5).

5. The pipe connector (2) according to claim 4, **characterized in that** the rotation lock (31) comprises a projection (32) formed on the molded body (4) and that a recess (33) is formed in the connector body (5), into which the projection (32) protrudes.

6. The pipe connector (2) according to claim 4, **characterized in that** the recess (33) is formed in the first end section (15) of the connector body (5), in particular that the recess (33) completely penetrates the first end section (15) of the connector body (5).

7. The pipe connector (2) according to claim 5 or 6, **characterized in that** the projection (32) is arranged in the area of the recess (24) of the molded body (4).

8. The pipe connector (2) according to one of the preceding claims, **characterized in that** a first end wall section (19) is formed adjacent to the first jacket section (12) of the connector body (5), which first end wall section (19) extends radially outward from the first jacket section (12), and that a sealing groove (25) is formed on the first end face (8) of the molded body (4), wherein the seal (6) is received in the sealing groove (25) and abuts against the sealing groove (25) and the first end wall section (19).

9. The pipe connector (2) according to claim 8, **characterized in that** the sealing groove (25) is formed on the outside of the first end face (8) of the molded body (4).

10. The pipe connector (2) according to one of the preceding claims, **characterized in that** a viewing window (34), which penetrates the second jacket section (13) and allows a view from the outside into the annular space (14), is arranged in the second jacket section (13).

11. A pipe connector assembly (1) for conveying liquid and/or gaseous media, the pipe connector assembly (1) comprising:
- a pipe connector (2);
- a pipe (3) coupled to the pipe connector (2),
**characterized in that**
the pipe connector (2) is designed according to one of the preceding claims and that the pipe (3) is inserted into the annular space (14) of the connector body (5) from the pipe receiving side (18), wherein, at a pressing point (35), the first jacket section (12) and/or the second jacket section (13) is/are pressed in the radial direction, so that the pipe (3) is clamped between the first jacket section (12) and the second jacket section (13).

12. The pipe connector assembly (1) according to claim 11, **characterized in that** the pipe (3) is deformed by the pressing of the first jacket section (12) and/or the second jacket section (13) and is pressed against the opposite jacket section (12).

13. The pipe connector assembly (1) according to claim 11 or 12, **characterized in that** a sealing surface (39) is formed between the pipe (3) and the first jacket section (12).

14. A method for manufacturing a pipe connector (2), the method comprising the following method steps:
- providing a molded body (4);
- providing a connector body (5) for connecting the molded body (4) to a pipe (3) to be connected;
- providing a seal (6) for sealing the connection between the connector body (5) and the molded body (4),
wherein
the connector body (5) is at least partially formed as a forming part of metal,
wherein the connector body (5) has an annular space (14) which is located between a sleeve-shaped first jacket section (12), which in cross-section essentially annularly surrounds a central longitudinal axis (11) of the connector body (5), and a sleeve-shaped second jacket section (13) of the connector body (5), which in cross-section essentially annularly surrounds the central longitudinal axis (11), wherein the first jacket section (12) is surrounded by the second jacket section (13) and the first jacket section (12) of the connector body (5) is connected to the second jacket section (13) at a first end section (15), in particular connected integrally in the form of a sleeve (16), and the jacket sections (12 ,13) are open to each other at a second end section (17), thereby forming a pipe receiving side (18) of the connector body (5),
wherein the pipe (3) can be inserted into the annular space (14) of the connector body (5) from the pipe receiving side (18),
wherein a recess (24) is formed on the molded body (4),
**characterized by** the following method steps:
- sliding the connector body (5) onto the molded body (4) from a first end face (8) of the molded body (4);
- pressing the first end section (15) of the connector body (5) into the recess (24) to create a form-fitting connection between the connector body (5) and the molded body (4).

15. The method for manufacturing a pipe connector assembly (1), **characterized by** the following method steps:
+ providing a pipe connector (2) manufactured according to claim 14
+ providing the pipe (3);
+ inserting the pipe (3) into the annular space (14);
+ creating a pressing point (35) for the form-fitting connection of the pipe (3) with the connector body (5).

## Revendications

1. Raccord de tuyaux (2) destiné à acheminer des fluides liquides et/ou gazeux, le raccord de tuyaux (2) comprenant :
- un corps moulé (4) ;
- un corps de raccord (5) destiné à raccorder le corps moulé (4) à un tuyau (3) à raccorder ;
- un joint d'étanchéité (6) pour assurer l'étanchéité du raccord entre le corps de raccord (5) et le corps moulé (4),
le corps de raccord (5) étant conçu au moins par endroits sous forme de pièce métallique de formage, le corps de raccord (5) présentant un espace annulaire (14) qui est situé entre une première section d'enveloppe (12) en forme de manchon entourant, de manière essentiellement annulaire, un axe longitudinal central (11) du corps de raccord (5) dans la section transversale, et une deuxième section d'enveloppe (13) en forme de manchon entourant, de manière essentiellement annulaire, l'axe longitudinal central (11) du corps de raccord (5) dans la section transversale, la première section d'enveloppe (12) étant entourée par la deuxième section d'enveloppe (13) et la première section d'enveloppe (12) du corps de raccord (5) étant reliée à la deuxième section d'enveloppe (13) au niveau d'une première section d'extrémité (15), en particulier d'un seul tenant sous la forme d'un rabat (16), et les sections d'enveloppe (12, 13) étant ouvertes l'une vers l'autre au niveau d'une deuxième section d'extrémité (17), formant ainsi un côté de réception de tuyau (18) du corps de raccord (5), le tuyau (3) pouvant être inséré dans l'espace annulaire (14) du corps de raccord (5) à partir du côté de réception de tuyau (18),
le corps de raccord (5) étant enfilé sur le corps moulé (4) à partir d'une première face frontale (8) du corps moulé (4),
un renfoncement (24) étant formé sur le corps moulé (4), **caractérisé en ce que** la première section d'extrémité (15) du corps de raccord (5) est enfoncée par complémentarité de forme dans le renfoncement (24).

2. Raccord de tuyaux (2) selon la revendication 1, **caractérisé en ce que** le corps moulé (4) est conçu en matière plastique.

3. Raccord de tuyaux (2) selon la revendication 1 ou 2, **caractérisé en ce que** le corps moulé (4) est conçu comme un raccord enfichable qui sert à la connexion avec un raccord enfichable complémentaire (7).

4. Raccord de tuyaux (2) selon l'une des revendications précédentes, **caractérisé en ce qu'**un dispositif antirotation (31) à engagement positif est formé entre le corps moulé (4) et le corps de raccord (5).

5. Raccord de tuyaux (2) selon la revendication 4, **caractérisé en ce que** le dispositif antirotation (31) comprend une saillie (32) formée sur le corps moulé (4) et **en ce qu'**un évidement (33) est formé dans le corps de raccord (5), dans lequel s'engage la saillie (32).

6. Raccord de tuyaux (2) selon la revendication 4, **caractérisé en ce que** l'évidement (33) est formé dans la première section d'extrémité (15) du corps de raccord (5), en particulier **en ce que** l'évidement (33) traverse complètement la première section d'extrémité (15) du corps de raccord (5).

7. Raccord de tuyaux (2) selon la revendication 5 ou 6, **caractérisé en ce que** la saillie (32) est agencée dans la zone du renfoncement (24) du corps moulé (4).

8. Raccord de tuyaux (2) selon l'une des revendications précédentes, **caractérisé en ce qu'**une première section de paroi frontale (19) est formée à la suite de la première section d'enveloppe (12) du corps de raccord (5), laquelle s'étend vers l'extérieur dans le sens radial à partir de la première section d'enveloppe (12), et **en ce qu'**une rainure d'étanchéité (25) est formée sur la première face frontale (8) du corps moulé (4), le joint d'étanchéité (6) étant logé dans la rainure d'étanchéité (25) et s'appuyant contre la rainure d'étanchéité (25) et la première section de paroi frontale (19).

9. Raccord de tuyaux (2) selon la revendication 8, **caractérisé en ce que** la rainure d'étanchéité (25) est formée sur l'extérieur de la première face frontale (8) du corps moulé (4).

10. Raccord de tuyaux (2) selon l'une des revendications précédentes, **caractérisé en ce qu'**une fenêtre de vision (34) est agencée dans la deuxième section d'enveloppe (13), laquelle traverse la deuxième section d'enveloppe (13) et permet de voir de l'extérieur dans l'espace annulaire (14).

11. Ensemble de raccords de tuyaux (1) pour le transport de fluides liquides et/ou gazeux, l'ensemble de raccords de tuyaux (1) comprenant :
- un raccord de tuyaux (2) ;
- un tuyau (3) couplé au raccord de tuyaux (2),
**caractérisé en ce que**
le raccord de tuyaux (2) est conçu selon l'une des revendications précédentes et le tuyau (3) est inséré dans l'espace annulaire (14) du corps de raccord (5) à partir du côté de réception du tuyau (18), la première section d'enveloppe (12) et/ou la deuxième section d'enveloppe (13) étant comprimée dans un point de compression (35) dans le sens radial, de sorte que le tuyau (3) est serré entre la première section d'enveloppe (12) et la deuxième section d'enveloppe (13).

12. Ensemble de raccords de tuyaux (1) selon la revendication 11, **caractérisé en ce que** le tuyau (3) est déformé par la compression de la première section d'enveloppe (12) et/ou de la deuxième section d'enveloppe (13) et est compressé contre la section d'enveloppe opposée (12).

13. Ensemble de raccords de tuyaux (1) selon la revendication 11 ou 12, **caractérisé en ce qu'**une surface d'étanchéité (39) est conçue entre le tuyau (3) et la première section d'enveloppe (12).

14. Procédé de fabrication d'un raccord de tuyaux (2), le procédé comprenant les étapes suivantes :
- la fourniture d'un corps moulé (4) ;
- la fourniture d'un corps de raccord (5) pour raccorder le corps moulé (4) à un tuyau (3) à raccorder ;
- la fourniture d'un joint d'étanchéité (6) pour étanchéifier le raccord entre le corps de raccord (5) et le corps moulé (4),
le corps de raccord (5) étant conçu au moins par endroits sous forme de pièce métallique de formage, le corps de rapport (5) présentant un espace annulaire (14) qui est situé entre une première section d'enveloppe (12) en forme de manchon entourant, de manière essentiellement annulaire, l'axe longitudinal central (11) du corps de raccord (5) dans la section transversale
et une deuxième section d'enveloppe (13) du corps de raccord (5) en forme de manchon entourant, de manière essentiellement annulaire, l'axe longitudinal central (11) dans sa section transversale, la première section d'enveloppe (12) étant entourée par la deuxième section d'enveloppe (13) et la première section d'enveloppe (12) du corps de raccord (5) étant reliée à la deuxième section d'enveloppe (13) au niveau d'une première section d'extrémité (15), en particulier reliée d'un seul tenant sous la forme d'un rabat (16), et les sections d'enveloppe (12, 13) étant ouvertes l'une vers l'autre au niveau d'une deuxième section d'extrémité (17), formant ainsi un côté de réception de tuyau (18) du corps de raccord (5), le tuyau (3) pouvant être inséré dans l'espace annulaire (14) du corps de raccord (5) à partir du côté de réception de tuyau (18), un renfoncement (24) étant formé sur le corps moulé (4), **caractérisé par** les étapes de procédé suivantes :
- l'enfilage du corps de raccord (5) sur le corps moulé (4) à partir d'une première face frontale (8) du corps moulé (4) ;
- l'enfoncement de la première section d'extrémité (15) du corps de raccord (5) dans le renfoncement (24) pour réaliser une liaison par complémentarité de forme entre le corps de raccord (5) et le corps moulé (4).

15. Procédé de fabrication d'un ensemble de raccords de tuyaux (1), **caractérisé par** les étapes suivantes :
+ la mise à disposition d'un raccord de tuyaux (2) fabriqué selon la revendication 14 ;
+ la mise à disposition du tuyau (3) ;
+ l'insertion du tuyau (3) dans l'espace annulaire (14) ;
+ la réalisation d'un point de compression (35) pour la liaison par complémentarité de forme du tuyau (3) avec le corps de raccord (5).
